# EUROPEAN PATENT SPECIFICATION

(11) **EP 0 397 457 B1**
(45) Date of publication and mention of the grant of the patent: **20.04.1994**
(21) Application number: 90304956.7
(22) Date of filing: 08.05.1990
(51) Int. Cl.: H01M 6/10, H01M 2/34

(54) **Spirally wound electrode assemblies and cells containing such**
Spiralförmig gewickelter Elektrodenblock und dieser enthaltende Zellen
Ensembles d'électrodes enroulées en spirale et piles contenant ces ensembles

(30) Priority: 08.05.1989 US 348367
(43) Date of publication of application: 14.11.1990
(73) Proprietor: EVEREADY BATTERY COMPANY, INC., St. Louis Missouri 63164 (US)
(72) Inventor: Marple, Jack William, Elyria, OH 44035 (US); Nave, Samuel Don, Conover, North Carolina (US)
(74) Representative: Lord, Hilton David

(56) References cited:
- DE-U- 8 810 976
- FR-A- 2 425 157
- GB-A- 2 225 153
- US-A- 4 707 421
- PATENT ABSTRACTS OF JAPAN, vol. 12, no. 20 (E-575)[2867], 21st January 1988; & JP-A-62 177 869 (SHIN KOBE ELECTRIC MACH. CO., LTD) 04-08-1987

## Description

The present invention relates to electrochemical cells having spirally wound electrode assemblies.

High energy density electrochemical cells intended for high rate applications generally employ a spirally wound electrode assembly. Such assemblies enable the use of a relatively large amount of active materials, and because the anode and cathode are so close together, the electrochemical reactions proceed with low resistance.

Forced discharge can result when a fully discharged cell is used in series with fully charged cells. This can lead to undesirable consequences. If the cell is forced to discharge, voltage reversal can occur. This results in plating of metallic anode material from the electrolyte salt onto the cathode. If plating is allowed to continue, dendrites of anode material can form and grow back through the separator to eventually contact remaining active anode. This dendrite bridge is a very low resistance path between the anode and cathode and causes an internal short. This can eventually result in a thermal runaway of the cell.

U.S. Patent 4,450,213 discloses one method of addressing the problem of voltage reversal. That method involves sandwiching a piece of copper foil down the entire length of and between two sections of anode material. Unfortunately, the copper foil takes up space which could be used for active material and an extra processing step is required.

As is discussed in U.S. Patent 4,707,421, the voltage reversal problem is most evident in cells which have an outside wrap of anode material and an anode tab located on the outer wrap. The patent discloses a method for avoiding the voltage reversal problem by locating the anode tab on a portion of the anode which is disposed between two portions of cathode. Also, the terminal edge of the cathode is covered with tape to prevent the flow of ions from the edge. The theory of success of the cells of U.S. Patent 4,707,421 is that the portion of anode sandwiched between the two sections of cathode will be consumed prior to the consumption of the outer wrap portion of anode which has cathode disposed only on one side. Thus, the tab which is located on the sandwiched portion of the anode will be disconnected from the rest of the anode once the sandwiched portion is consumed. An obvious disadvantage of this solution is that a relatively large amount of anode is not utilised. Also, covering the end of the cathode with tape presents production and processing difficulties.

In view of the disadvantages of known methods, there remains a need for a solution to the problems resulting from voltage reversal in electrochemical cells using spirally wound electrode assemblies.

Thus, in a first aspect, the present invention provides a spirally wound electrode assembly comprising layers of anode and cathode material separated by layers of ionically permeable, electrically insulative, separator material, the anode material being outermost and having a connecting tab located at its external end serving as the only electrical connection to the anode material, the assembly being covered by an ionically impermeable, electrically insulative film, characterised in that one end of the film is interleaved between the outermost cathode layer and an adjacent anode layer, to an extent at least coterminous with, and preferably beyond, the location of the tab.

In another aspect, the present invention provides an electrochemical cell comprising an electrode assembly as defined, wherein the tab provides the only contact between the anode material and its terminal.

In yet another aspect, the present invention provides an electrochemical cell having a spirally wound electrode assembly, the assembly comprising alternating layers of a cathode strip and an anode strip wherein each such layer has a layer of an ionically permeable, electrically insulative, separator strip positioned therebetween, and each layer of anode, cathode and separator has an inner and an outer surface, wherein the inner surface is the surface facing the centre of the spiral, the reactive amount of cathode being relatively less than the reactive amount of anode, and wherein the outer electrode layer is anode, and only has a cathode layer disposed adjacent its inner surface, this cathode having an anode disposed next to both its inner and outer surfaces, and having a terminating end, an ionically impermeable, electrically insulating, overwrap film wrapped about the wound strips and having a first section disposed in between the terminating cathode end and one of the anode layers, an anode tab being located on the outer layer of anode directly radially outwardly opposite the overwrap film, and providing the only contact between the anode and its terminal, whereby, during forced discharge of the cell, the portion of anode on which the tab is located is physically and electrically disconnected from the rest of the anode.

Accordingly, the present invention provides cells containing spirally wound electrodes resistant to the problems occurring during forced discharge.

During forced discharge, in the electrochemical cells containing electrode assemblies in accordance with the present invention, the anode tab is separated from the rest of the anode in a fuse-like manner and the internal electrical circuit is thereby broken, substantially avoiding the voltage reversal problem.

In describing the present invention, the term "layer" is used in relation to anode, cathode and separator. This term includes both singular and plural, and may refer to separate pieces of anode, cathode or separator, for example, or to a single strip of anode, a strip of separator, a strip of cathode and another strip of separator laid next to each other respectively and wound to provide a spiral having a plurality of distinct layers, or any other suitable construction. Each layer of anode and cathode will have a layer of separator positioned therebetween. As used herein, the inner surface of any layer is the surface facing the centre of the spiral.

One significant advantage of the present invention is that it can be used with just about any type of coiled electrode assembly in just about any circumstance. The only limiting factors are that the anode material should be able to separate to isolate the tab, and that the tab should be positioned over a portion of the insulative film. The latter is merely a physical parameter easily met using techniques well-known in the art, while the former requires that, after forced discharge, there is no conductive layer left between separated parts of the anode layer such that the problems enumerated above are still encountered.

Apart from the above limitations, the materials used in accordance with the present invention will generally be those employed in the art, and will be apparent to those skilled in the art. More detailed embodiments are as follows.

The cathode may be in the form of strips, foils or impregnated screens. Examples of suitable cathode materials include transition metal oxides, transition metal sulphides, and polycarbon fluoride polymers. Preferred cathode materials are FeS₂, MnO₂, (C₂F)ₙ, (CFₓ)ₙ, V₂O₅, WO₃, MoO₃, MoS₂, lead oxides, cobalt oxides, copper oxides, CuS, CuS₂, Bi₂O₃, In₂O₃, NiS, Ag₂CrO₄, Ag₃PO₄ and TiS₂. Preferably, the cathode material is provided in strip form by coating a mixture of active cathode material, binder and conductive agent onto, or incorporating such a mixture into, a carrier. Although expanded metal screens are suitable carriers, the preferred carrier is a metal foil. Suitable metal foil carriers are those known in the art for such a purpose.

The efficacy of the invention relies on the physical disconnection of the tab location portion of the anode from the rest of the anode. Thus, it is highly preferred that the anode be in the form of a foil of anode material without a carrier. Examples of suitable anode materials are the alkali metals, alkaline earth metals, other suitable metals and alloys thereof. Preferred alkali and alkaline earth metals are lithium, sodium, potassium, calcium and magnesium. Although the specific anode material will vary according to the desired cell system, generally lithium is most preferred. Another preferred metal is aluminium. While the preferred cathode for association with a lithium anode is FeS₂.

Examples of suitable separator materials are microporous polypropylene or polyethylene and nonwoven materials, such as nonwoven polypropylene or glass fibre mats.

In the assemblies of the present invention, the anode forms the outermost electrode layer. The cathode layer inside this forms the outermost cathode layer, with anode material adjacent both inner and outer surfaces, and has a terminating end.

An overwrap electrically insulating and ionically impermeable film is disposed about the entire wound electrode assembly, making the outermost material of the assembly the overwrap film. This film has a first portion which extends a length into the assembly on one side or surface of the terminating end of the outermost cathode layer. Because the film is ionically impermeable, the film blocks the flow of ions between that portion of the cathode and the juxtaposed anode layer.

Examples of suitable overwrap films are nonporous polyethylene, polypropylene and suitable polyesters. Preferably, nonporous polypropylene is employed.

A tab is located on a portion of the outer anode layer directly radially outward from the interleaved portion of overwrap film. Accordingly, the tab location portion of the anode may be considered as having boundaries. On one side, the boundary is the portion of the outer anode layer which is radially outwardly adjacent the leading edge of the first portion of the overwrap film, that is, the interleaved length of edge extending into the assembly. The other boundary is the terminating edge of the outer anode layer.

Thus, the tab location portion will generally be at least equal in length to the length of the first section of overwrap film extending into the assembly. As the tab provides the only contact between the anode and its terminal, the overwrap film serves to prevent contact of the outer anode layer and the cell container.

In one embodiment of the present invention, the interleaved portion of the overwrap film is between the end of the outermost cathode layer and the anode disposed adjacent its inner surface. It is preferable, in this embodiment, for the outer layer of anode to have a section extending beyond the terminating end of the outermost cathode layer. The tab is preferably located on this extending section of anode. In this embodiment, after experiencing forced discharge, the anode may have two break points. One point is on the outer layer of anode adjacent the edge of the cathode, and the other is on the layer of anode disposed next to the cathode's inner surface at a point juxtaposed to the leading edge of the interleaved portion of the overwrap film.

In another embodiment, the interleaved portion of the overwrap film is disposed between the outermost cathode layer and outermost anode layer. In this embodiment, the ends of the outermost cathode layer and the anode layer may be coterminous. After experiencing an effective amount of forced discharge, the cell's internal circuit will be disconnected. The break can occur on the outer anode layer at a point juxtaposed the initial edge of the overwrap film.

This assembly operates effectively when the anode and cathode are of identical widths and fully aligned during assembly. To account for inaccuracies which can be encountered during manufacture of the strips or during assembly, the anode preferably has a narrower width relative to the cathode. Although the entire length of anode may be narrower, it is sufficient if only the portion of anode opposite the edge of the terminating end of the outermost cathode layer is narrower. This narrowing may be accomplished, for example, by notching the anode in the area which will be opposite the end of the outermost cathode layer. It is also highly preferred that a lesser amount of active cathode relative to active anode is employed.

The cell will also generally comprise a liquid electrolyte. The electrolyte may vary according to the nature of anode and cathode, but suitable examples include aqueous and nonaqueous solutions containing metal salt solutes. Preferred electrolytes for use with alkali and alkaline earth metals include organic solvents, or mixtures thereof, containing dissolved alkali or alkaline earth metal salts, for example, propylene carbonate and dimethoxyethane containing, for example, LiClO₄ or LiCF₃SO₃.

To assemble the cell, a suitable method is for a layer of electrode material, a layer of separator, a layer of the other electrode material and a layer of separator to be introduced to a suitable winding apparatus. The order of the electrode materials is chosen to provide a wound assembly wherein the outer electrode is the anode. Just prior to the assembly being completely wound, the first section of the overwrap film is inserted on one side of the terminating end of the cathode layer. The winding is then completed and has overwrap film wrapped completely around the assembly. The wound assembly is then placed in a cell container, and electrolyte added. Finally, the open end of the container is sealed to provide the completed cell.

The present invention will now be illustrated in detail with reference to the accompanying drawings, in which:
Figure 1 depicts a cross-section view of one version of an electrode assembly according to the present invention;
Figure 2 depicts an enlarged view of the end of the cathode and anode, and shows the tab location, in the assembly of Fig. 1;
Figures 3a and b depict anodes having a portion removed;
Figure 4 depicts a cross-section view of another version of an electrode assembly of the invention; and
Figure 5 depicts an enlarged view of the end of the cathode and anode, and shows the tab location, in the assembly of Fig. 4.

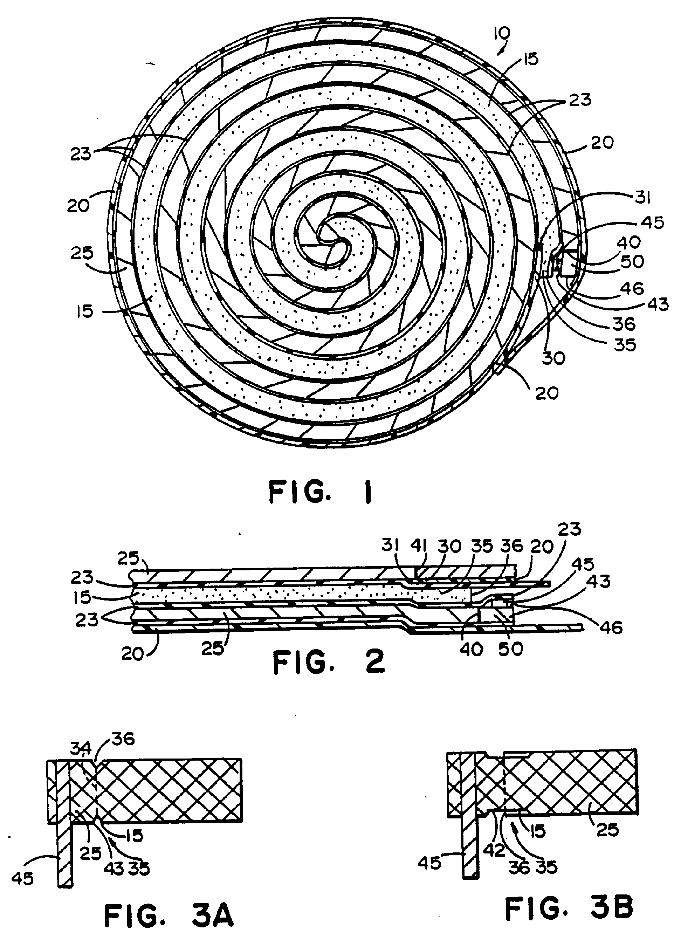

In Figures 1 and 2, spirally wound electrode assembly 10 has cathode 15, anode separator 23, and overwrap film 20. Film 20 has first section 30 extending into assembly 10 on the inner surface of cathode 15 between the terminating end 35 of cathode 15 and anode 25. Tab 45 is located on anode section 50 which extends beyond edge 36 of cathode end 35. Tab location portion 43 is bounded by the edge 31 of film 20 and edge 46 of anode section 50. When a cell uses such an assembly under conditions of forced discharge, anode 25 may break at either of points 40 and 41. Point 40 is on anode section 50 juxtaposed to edge 36 of cathode end 35. Point 41 is on anode 25 juxtaposed to the edge 31 of film 20.

In Figure 2, the portion of assembly 10 with tab 45 is emphasised. Alternating layers of anode 25, separator 23, cathode 15 and separator 23 are shown. Tab 45 is located on extending anode section end 50. Cathode end portion 35 is blocked from ionically permeable contact with anode 25 by the first section 30 of overwrap film 20.

Figure 3A shows anode 25 with a tab 45 in contact with the entire width of anode 25. The dotted line 34 represents the edge 36 of terminating end 35 of cathode 15. Anode 25 has notch 43.

Figure 3B shows anode 25 with tab 45. The dotted line 34 represents the edge 36 of end 35 of cathode 15. In this instance, anode 25 has notch 42.

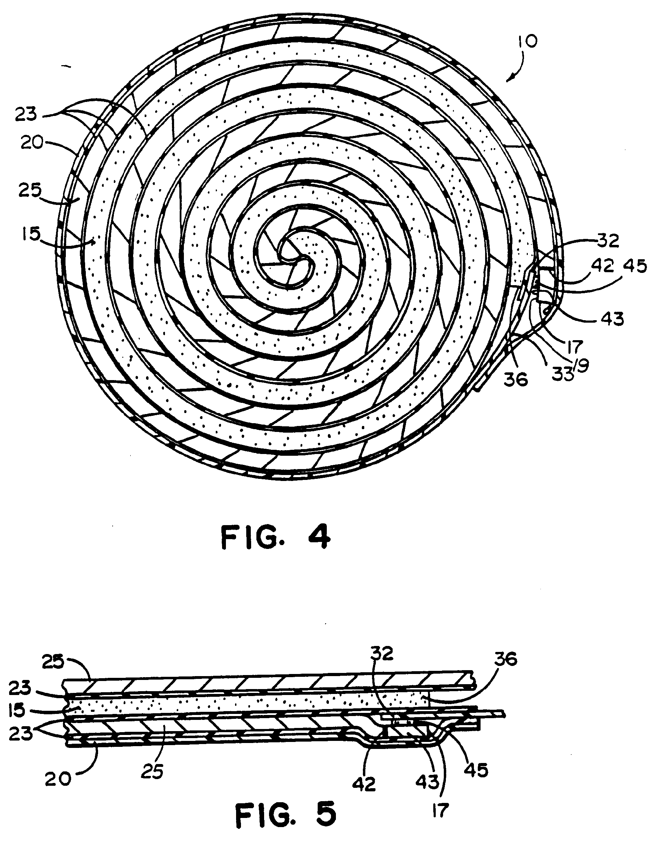

In Figures 4 and 5, an electrode assembly having a first section 33 of the overwrap film 20 extending between the outer anode layer and cathode is shown. The assembly 10 is comprised of cathode 15, anode 25, separator 23 and overwrap film 20. Film 20 has first section 33 extending into assembly 10 on the outer surface of cathode 15 between cathode end 36 and anode end 17. Although anode end 17 is shown coterminous with cathode end 36, it may extend beyond cathode end 36. It may also terminate before cathode end 36, so long as there is a portion radially outward of the first section of overwrap film. Tab 45 is located on anode end 17 adjacent to the first section 33 of film 20. Tab location portion 43 thus has boundaries set by edge 32 of film 20 and edge 19 of anode 25. Under conditions of forcible discharge, anode 25 can break at point 42, juxtaposed to edge 32 of film 20

In Figure 5, the portion of assembly 10 with tab location portion 43 is emphasised. Alternating layers of anode 25, separator 23, cathode 15 and separator 23 are shown. Tab 45 is located on anode 25 at tab location portion 43, which has the boundaries described above. Cathode end 36 is blocked from ionically permeable contact with anode 25 by the first section 33 of overwrap film 20.

## Claims

1. A spirally wound electrode assembly comprising layers of anode and cathode material separated by layers of ionically permeable, electrically insulative separator material, the anode material being outermost and having a connecting tab located at its external end serving as the only electrical connection to the anode material, the assembly being covered by an ionically impermeable, electrically insulative film, characterised in that one end of the film is interleaved between the outermost cathode layer and an adjacent anode layer, to an extent at least coterminous with, and preferably beyond, the location of the tab.

2. An assembly according to Claim 1, wherein upon forced discharge, the portion of the anode upon which the tab is located becomes physically and electrically disconnected from the remainder of the anode.

3. An assembly according to Claim 1 or 2, wherein the film extends inside the outermost cathode layer.

4. An assembly according to any preceding Claim, wherein the outer anode layer has a section extending beyond the terminating end of the cathode, the extending anode section containing the tab.

5. An assembly according to any preceding claim, wherein the anode layer comprises a foil of an alkali or an alkaline earth metal, and the cathode layer is an active cathode material, preferably a transition metal sulphide or oxide, disposed on both sides of a metal foil carrier.

6. An assembly according to any preceding claim, wherein the foil anode layer is an alkali or alkaline earth metal, preferably lithium, sodium, potassium, magnesium or calcium.

7. An assembly according to any preceding claim, wherein the foil anode layer comprises lithium, and the active cathode material is FeS₂.

8. An assembly according to any of claims 1 and 3 to 7, wherein the film extends outside the outermost cathode layer.

9. An assembly according to Claim 8, wherein the outer anode layer has an end substantially coterminous with the terminating end of the cathode layer.

10. An assembly according to any preceding claim, wherein the anode layer is narrower than the cathode layer, at least adjacent the external end of the cathode layer.

11. An assembly according to claim 10, wherein the anode layer is notched to effect the narrowing.

12. An assembly according to any preceding claim, wherein the cathode layers comprise relatively less active material than the anode layers.

13. An electrochemical cell having a spirally wound electrode assembly comprising alternating layers of a cathode strip and an anode strip, wherein each such layer has a layer of an ionically permeable, electrically insulative separator strip positioned therebetween, wherein each layer of anode, cathode and separator has an inner and outer surface, the inner surface being the surface facing the centre of the spiral and wherein the reactive amount of cathode is greater relative to the reactive amount of anode; the assembly having an outer anode layer which thus has a cathode layer only disposed next to the outer layer's inner surface, which cathode layer having anode disposed next to both its inner and outer surfaces, and having terminating end; the assembly further comprising an ionically impermeable, electrically insulating overwrap film wrapped about the wound strips of anode, cathode and separator strips; the film having a first section disposed in between the terminating cathode end and one of the anode layers; the outer anode layer having an anode tab located thereon radially outwardly opposite the overwrap film, the tab providing the only contact between the anode and the anode terminal; wherein during forced discharge of the cell, the portion of an anode on which the tab is located is physically and electrically disconnected from the rest of the anode.

14. An electrochemical cell according to claim 13 in which the electrode assembly is as defined in any one of claims 3 to 12.

## Patentansprüche

1. Spiralförmig gewickelte Elektrodenanordnung, die Schichten von Anoden- und Kathodenmaterial umfaßt, die durch Schichten von ionenundurchlässigem, elektrisch isolierendem Separatormaterial getrennt sind, wobei sich das Anodenmaterial ganz außen befindet und eine Anschlußfahne aufweist, die sich an seinem äußeren Ende befindet und als einzige elektrische Verbindung zu dem Anodenmaterial dient, wobei die Anordnung von einem ionenundurchlässigen, elektrisch isolierenden Film bedeckt ist, **dadurch gekennzeichnet,** daß ein Ende des Films zwischen die äußerste Kathodenschicht und eine angrenzende Anodenschicht so weit eingefügt ist, daß er an der Position der Fahne oder vorzugsweise danach endet.

2. Anordnung nach Anspruch 1, wobei bei Zwangsentladung der Abschnitt der Anode, an dem sich die Fahne befindet, physisch und elektrisch vom Rest der Anode getrennt wird.

3. Anordnung nach Anspruch 1 oder 2, wobei sich der Film in die äußerste Kathodenschicht hinein erstreckt.

4. Anordnung nach einem der vorangehenden Ansprüche, wobei die äußere Anodenschicht einen Abschnitt hat, der sich über das Anschlußende der Kathode hinaus erstreckt, wobei der verlängerte Anodenabschnitt die Fahne enthält.

5. Anordnung nach einem der vorangehenden Ansprüche, wobei die Anodenschicht eine Folie aus einem Alkali- oder Erdalkalimetall umfaßt, und die Kathodenschicht ein aktives Kathodenmaterial ist, vorzugsweise ein Übergangsmetallsulfid oder -oxid, das sich an beiden Seiten eines Metallfolienträgers befindet.

6. Anordnung nach einem der vorangehenden Ansprüche, wobei die Folien-Anodenschicht ein Alkali- oder Erdalkalimetall, vorzugsweise Lithium, Natrium, Kalium, Magnesium oder Calcium ist.

7. Anordnung nach einem der vorangehenden Ansprüche, wobei die Folien-Anodenschicht Lithium umfaßt, und das aktive Kathodenmaterial FeS₂ ist.

8. Anordnung nach einem der Ansprüche 1 und 3 bis 7, wobei sich der Film außerhalb der äußersten Kathodenschicht erstreckt.

9. Anordnung nach Anspruch 8, wobei die äußere Anodenschicht ein Ende hat, das sich im wesentlichen genauso weit erstreckt wie das Anschlußende der Kathodenschicht.

10. Anordnung nach einem der vorangehenden Ansprüche, wobei die Anodenschicht wenigstens am äußeren Ende der Kathodenschicht schmaler ist als die Kathodenschicht.

11. Anordnung nach Anspruch 10, wobei die Anodenschicht eingekerbt ist, um die Verengung zu erreichen.

12. Anordnung nach einem der vorangehenden Ansprüche, wobei die Kathodenschichten weniger aktives Material umfassen als die Anodenschichten.

13. Elektrochemisches Element mit einer spiralförmig gewickelten Elektrodenanordnung, die abwechselnde Schichten eines Kathodenstreifens und eines Anodenstreifens umfaßt, wobei sich zwischen jeder dieser Schichten eine Schicht eines ionendurchlässigen, elektrisch isolierenden Separatorstreifens befindet, wobei jede Schicht der Anode, der Kathode und des Separators eine Innen- und eine Außenfläche aufweist, wobei die Innenfläche die dem Mittelpunkt der Spirale zugewandte Fläche ist, und wobei die reaktive Menge der Kathode größer ist als die reaktive Menge der Anode; wobei die Anordnung eine äußere Anodenschicht aufweist, wobei sich so lediglich eine Kathodenschicht an der Innenfläche der äußeren Schicht befindet, wobei sich sowohl an der Innen- als auch an der Außenfläche dieser Kathodenschicht Anodenmaterial befindet, und sie ein Anschlußende hat; wobei die Anordnung des weiteren einen ionenundurchlässigen, elektrisch isolierenden Überzugsfilm umfaßt, der über die gewickelten Streifen der Anode, der Kathode und Separatorstreifen gezogen ist, wobei sich ein erster Abschnitt des Films zwischen dem Kathodenanschlußende und einer der Anodenschichten befindet; wobei die äußere Anodenschicht eine Anodenfahne aufweist, die radial außerhalb gegenüber dem Überzugsfilm daran angeordnet ist, wobei die Fahne den einzigen Kontakt zwischen der Anode und dem Anodenanschluß bildet, wobei bei Zwangsentladung des Elementes der Abschnitt einer Anode, an dem sich die Fahne befindet, physisch und elektrisch vom Rest der Anode getrennt wird.

14. Elektrochemisches Element nach Anspruch 13, das eine Elektrodenanordnung nach einem der Ansprüche 3 bis 12 hat.

## Revendications

1. Assemblage d'électrodes enroulées en spirale, comprenant des couches de matières d'anode et de cathode séparées par des couches de matière de séparation perméable aux ions et procurant une isolation électrique, la matière d'anode étant la plus externe et comportant une patte de liaison disposée à son extrémité externe servant de seule connexion électrique à la matière d'anode, l'assemblage étant recouvert par un film imperméable aux ions et procurant une isolation électrique, caractérisé en ce qu'une extrémité du film est entrelacée entre la couche de cathode la plus externe et une couche d'anode adjacente sur une étendue se terminant au moins de manière conjointe avec l'endroit où est située la patte et, de préférence, au-delà de ce dernier.

2. Assemblage selon la revendication 1, dans lequel, lors d'une décharge forcée, la portion de l'anode, sur laquelle est disposée la patte, est physiquement et électriquement déconnectée du reste de l'anode.

3. Assemblage selon la revendication 1 ou 2, dans lequel le film s'étend à l'intérieur de la couche de cathode la plus externe.

4. Assemblage selon l'une quelconque des revendications précédentes, dans lequel la couche externe d'anode possède une section se prolongeant au-delà de l'extrémité terminale de la cathode, la section de prolongement de l'anode contenant la patte.

5. Assemblage selon l'une quelconque des revendications précédentes, dans lequel la couche d'anode comprend une feuille d'un métal alcalin ou alcalino-terreux, et la couche de cathode est une matière de cathode active, de préférence un sulfure ou un oxyde de métal de transition disposé de part et d'autre d'un support en forme de feuille métallique .

6. Assemblage selon l'une quelconque des revendications précédentes, dans lequel la couche d'anode en forme de feuille est un métal alcalin ou alcalino-terreux, de préférence le lithium, le sodium, le potassium, le magnésium ou le calcium.

7. Assemblage selon l'une quelconque des revendications précédentes, dans lequel la couche d'anode en forme de feuille comprend du lithium et la matière de cathode active est FeS₂.

8. Assemblage selon l'une quelconque des revendications 1 et 3 à 7, dans lequel le film se prolonge à l'extérieur de la couche de cathode la plus externe.

9. Assemblage selon la revendication 8, dans lequel la couche externe d'anode possède une extrémité terminale essentiellement conjointe avec l'extrémité terminale de la couche de cathode.

10. Assemblage selon l'une quelconque des revendications précédentes, dans lequel la couche d'anode est plus étroite que la couche de cathode, au moins en position adjacente à l'extrémité externe de la couche de cathode.

11. Assemblage selon la revendication 10, dans lequel la couche d'anode est munie d'une encoche pour réaliser le rétrécissement.

12. Assemblage selon l'une quelconque des revendications précédentes, dans lequel les couches de cathode comprennent une matière relativement moins active que celle des couches d'anode.

13. Pile électrochimique comportant un assemblage d'électrodes enroulées en spirale, comprenant des couches alternées d'un ruban de cathode et d'un ruban d'anode, dans laquelle chacune des couches de ce type comporte une couche d'un ruban de séparation perméable aux ions et procurant une isolation électrique positionnée entre eux, dans laquelle chaque couche d'anode, de cathode et de séparation possède une surface interne et une surface externe, la surface interne étant la surface orientée vers le centre de la spirale et dans laquelle la quantité réactive de la cathode est supérieure par rapport à la quantité réactive de l'anode; l'assemblage comportant une couche externe d'anode qui, ainsi, possède une couche de cathode qui est seulement disposée à côté de la surface interne de la couche externe, ladite couche de cathode comportant une anode disposée à côté à la fois de ses surfaces interne et externe, et comportant une extrémité terminale; l'assemblage comprenant, en outre, un film de recouvrement imperméable aux ions et procurant une isolation électrique enveloppant les rubans enroulés d'anode, de cathode et de séparation, le film comportant une première section disposée entre l'extrémité terminale de la cathode et une des couches d'anode; la couche externe d'anode comportant une patte d'anode disposée sur elle radialement vers l'extérieur face au film de recouvrement, la patte procurant le seul contact entre l'anode et la borne d'anode; dans lequel, au cours d'une décharge forcée de la pile, la portion de l'anode, sur laquelle est disposée la patte, est déconnectée physiquement et électriquement du reste de l'anode.

14. Pile électrochimique selon la revendication 13, dans laquelle l'assemblage d'électrodes est tel que défini dans l'une quelconque des revendications 3 à 12.
